# EUROPÄISCHE PATENTSCHRIFT

(11) **EP 1 128 515 B1**
(45) Veröffentlichungstag und Bekanntmachung des Hinweises auf die Patenterteilung: **12.07.2006**
(21) Anmeldenummer: 01103149.9
(22) Anmeldetag: 10.02.2001
(51) Int. Cl.: H02H 3/20

(54) **Überspannungsschutz für den 14-V-Zweig eines 42-V-/14-V-Bordnetzes eines Kraftfahrzeuges**
Overvoltage protection for the 14-V-branch of a 42-V/14-V motor vehicle power supply
Dispositif de protection contre les surtensions pour une branche 14-V d'un réseau de bord d'une automobile 42-V/14-V

(30) Priorität: 24.02.2000 DE 10008773
(43) Veröffentlichungstag der Anmeldung: 29.08.2001
(73) Patentinhaber: Hella KGaA Hueck & Co., 59552 Lippstadt (DE)
(72) Erfinder: Fortkort, Karl-Heinz, 59239 Wadersloh (DE); Schriek, Josef, 59556 Lippstadt (DE)

(56) Entgegenhaltungen:
- EP-B- 0 148 370
- US-A- 3 512 044
- US-A- 3 819 986
- US-A- 4 672 294
- PATENT ABSTRACTS OF JAPAN vol. 015, no. 495 (P-1288), 13. Dezember 1991 (1991-12-13) & JP 03 214067 A (MURATA MFG CO LTD), 19. September 1991 (1991-09-19)

## Beschreibung

Die Erfindung betrifft eine Überspannungsschutzschaltung für den 14V-Zweig eines 42V/14V-Bordnetzes eines Kraftfahrzeugs, mit einer Leistungselektronik zur Versorgung des 14V-Zweiges, deren Eingang mit dem 42V-Zweig verbunden ist.

Mit der zunehmenden Anzahl elektrischer und elektronischer Verbraucher u.a. für Sicherheits- und Komfortzwecke ist auch der elektrische Leistungsbedarf im Kraftfahrzeug enorm angestiegen und wird in nächster Zeit weiter ansteigen. Um die hierbei zu übertragenden Stromstärken in Grenzen zu halten, ist eine Neuauslegung des elektrischen Bordnetzes auf eine auf 42V erhöhte Ladespannung vorgesehen.

Eine erhöhte Ladespannung ermöglicht bei gleicher Leistungsübertragung geringere Stromstärken und damit eine Verringerung von Drahtquerschnitten. Durch die Einsparung teuren Kupfermaterials wird eine erhebliche Gewichts- und Kostenverminderung erzielt. Weiterhin ermöglicht eine erhöhte Bordnetzspannung vielfach eine einfachere und kostengünstiger Auslegung von elektronischen Geräten, die mit hohen Spannungen arbeiten, wie zum Beispiel Steuergeräte für Hochdruckgasentladungslampen.

Allerdings wird für einige Verbraucher im Kraftfahrzeug auch weiterhin die klassische Ladespannung von 14V (dies entspricht einer Batteriespannung von 12V) benötigt, und zwar insbesondere für Glühlampen, die bei Auslegung für höhere Spannungen besonders empfindlich auf mechanische Belastungen reagieren, was zu einer stark verringerten Lebensdauer der Lampen führt.

Das Bordnetz der Zukunft wird daher zwei verschiedene Spannungen, nämlich voraussichtlich Ladespannungen von 42V und 14V (entsprechend Batteriespannungen von 36V und 12V) aufweisen. Nach einem bevorzugten Bordnetz konzept werden beide Netzzweige durch einen Energiespeicher ("Batterie") gepuffert. Der Generator des Fahrzeugs speist den 42V-Netzzweig für die Hochlastverbraucher. Der 14V-Zweig wird über eine Leistungselektronik versorgt, die insbesondere als DC/DC-Wandler ausgeführt sein kann. Eine derartige Schaltungsanordnung ist aus US 4 672 294 bekannt. In dem neukonzipierten Bordnetz ergeben sich aber auch neue Fehlerzustände; einer davon ist ein Kurzschluß zwischen einer 42V- und einer 14V-Versorgungsleitung. Bei einem solchen Kurzschluß wird ohne einen Überspannungsschutz die Spannung auf der 14V-Versorgungsleitung ansteigen, wodurch 14V-Verbraucher und 14V-Komponenten in Steuergeräten zerstört werden.

Es ist die Aufgabe der Erfindung einen einfachen und kostengünstigen Überspannungsschutz für den genannten Fehlerfall zu schaffen.

Diese Aufgabe wird erfindungsgemäß durch die kennzeichnenden Merkmale des unabhängigen Anspruchs 1 gelöst.

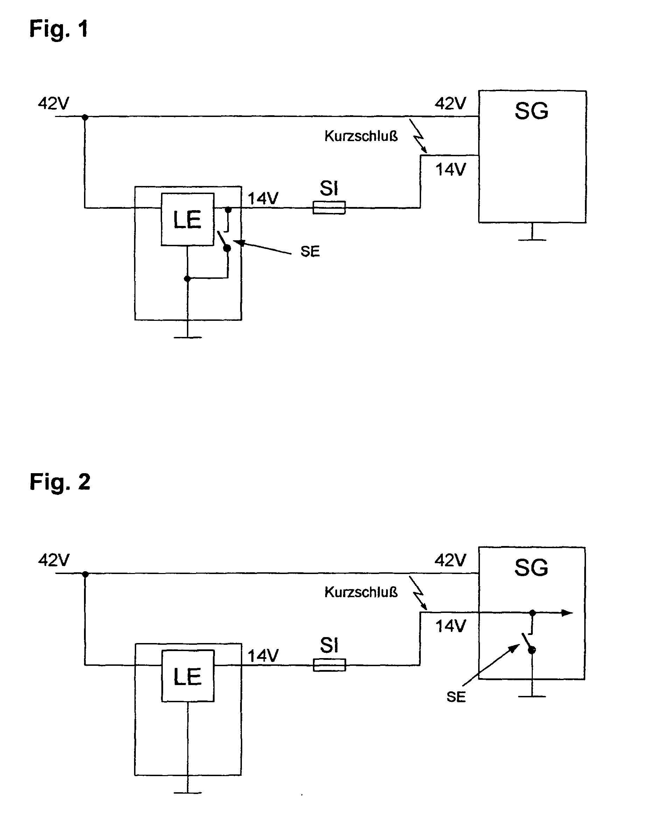

Ein Ausführungsbeispiel der erfindungsgemäßen Überspannungsschutzschaltung ist in Figure 2 dargestellt und wird nachfolgend anhand der Zeichnung näher erläutert.

Die Figuren zeigen jeweils schematisch einen Ausschnitt aus einem 42V/14V-Fahrzeugbordnetz. Nicht dargestellt sind insbesondere der Fahrzeuggenerator, sowie die Energiespeicher ("Batterien") in den beiden Bordnetzzweigen.

Die Figur 1 zeigt eine Überspannungsschutzschaltung gemäss dem Stand der Technik, bei der Überspannungsschutz Bestandteil der 14V-Spannungserzeugung ist, und in die Leistungselektronik, d. h. z. B. in den DC/DC-Wandler integriert ist. Im Falle eines Kurzschlusses zwischen der 42V- und der 14V-Versorgungsleitung wird der Spannungsanstieg auf der 14V-Versorgungsleitung erkannt und die Leistungselektronik (LE) abgeschaltet. Über einen Schalter, der vorzugsweise als Halbleiterschalter oder als Relais ausgelegt ist, wird eine Verbindung über eine im 14V-Zweig liegende Sicherung (SI) von der 14V-Versorgung gegen Masse geschaffen. Die 14V-Sicherung löst schnell aus, da sie für einen geringen Strom ausgelegt ist. Anschließend wird die 14V-Versorgung wieder eingeschaltet.

Im Gegensatz zu dem in der Figur 1 dargestelltem "zentralen Überspannungsschutz" zeigt die Figur 2 eine erfindungsgemäße Schaltung mit einem "dezentralen Überspannungsschutz". Hierbei ist die die 14V-Leitung gegen Masse schaltende Schalteinrichtung (SE) z. B. in ein Steuergerät (SG) eingebaut. Die Funktionsweise entspricht im übrigen der in der Figur 1 dargestellten Ausführung.

Ausführungsbeispiele zu in den zweiten Alternative des Anspruchs 1, definierten Schaltungen sind in den Figuren nicht explizit dargestellt. Solche Ausführungsbeispiele ergeben sich aber einfach dadurch, daß man in der Figur 2 die Schalteinrichtung jeweils durch eine Regeleinrichtung (ausführbar z. B. im wesentlichen durch einen Leistungstransistor) ersetzt denkt, welche im Kurzschlußfall die Ausgangsleitung der Leistungselektronik oder die Versorgungsleitung des Steuergeräts auf einen konstanten Spannungswert, der vorzugsweise in der Größenordnung von 12-14 V liegt, einregelt. Auch hierdurch kann auf einfache Weise die Überlastung der 14V-Verbraucher verhindert und die Sicherung ausgelöst werden.

Die in den Figuren dargestellte Anordnung der den Fehlerzustand beseitigenden Sicherung im 14-Zweig stellt ebenfalls eine Vereinfachung dar, denn selbstverständlich ist in der Praxis auch der 42V-Zweig durch mindestens eine Sicherung geschützt. Je nach Auslegung der Sicherungen kann durch die erfindungsgemäße Überwachungsschaltung auch zuerst die Sicherung im 42V-Zweig ausgelöst werden, wodurch der Kurzschluß zwischen dem 14V- und der 42V-Zweig ebenfalls beseitigt wird.

## Patentansprüche

1. Überspannungsschutzschaltung für den 14V-Zweig eines 42V/14V-Bordnetzes eines Kraftfahrzeug,
mit einer Leistungselektronik (LE) zur Versorgung des 14V-Zweiges, deren Eingang mit dem 42V-Zweig verbunden ist,
und mit mindestens einem über eine Versorgungsleitung mit dem 14V-Zweig verbundenen Steuergerät (SG),
**dadurch gekennzeichnet,**
**dass** das Steuergerät (SG) eine Schalteinrichtung (SE) aufweist, welche im Kurzschlußfall zwischen dem 14V- und dem 42V-Zweig die Versorgungsleitung gegen Masse schaltet, oder eine Regeleinrichtung aufweist, welche im Kurzschlußfall zwischen dem 14V- und dem 42V-Zweig die Versorgungsleitung auf einen konstanten Spannungswert regelt und dass die Schalteinrichtung (SE) bzw. die Regeleinrichtung eine im 14V-Zweig oder im 42V-Zweig liegende Sicherung (SI) auslöst

2. Überspannungsschutzschaltung nach Anspruch 1, **dadurch gekennzeichnet, daß** die Schalteinrichtung (SE) als Halbleiterschalter ausgebildet ist.

3. Überspannungsschutzschaltung nach Anspruch 1, **dadurch gekennzeichnet, daß** die Schalteinrichtung (SE) als Relais ausgebildet ist.

## Claims

1. Overvoltage protection for the 14V branch of a 42V/14V motor vehicle power supply, having power electronics (LE) for supplying the 14V branch, the input of which is linked to the 42V branch, and at least one control device (SG) linked via a supply line to the 14V branch, **characterised in that** the control device (SG) has a switching apparatus (SE) which, in the event of a short circuit between the 14V branch and the 42V branch, connects the supply line to earth, or has a regulating apparatus which, in the event of a short circuit between the 14V branch and the 42V branch, regulates the supply line to a constant voltage value and that the switching apparatus (SE) or the regulating apparatus trips a fuse (SI) situated in the 14V branch or the 42V branch.

2. Overvoltage protection according to claim 1, **characterised in that** the switching apparatus (SE) is designed as a semiconductor switch.

3. Overvoltage protection according to claim 1, **characterised in that** the switching apparatus (SE) is designed as a relay.

## Revendications

1. Circuit de protection contre la surtension pour la branche 14V d'un réseau de bord 42V/14V d'un véhicule automobile
avec une électronique de puissance (LE) pour l'alimentation de la branche 14V, dont l'entrée est reliée à la branche 42V,
et avec au moins un instrument de commande (SG) relié à la branche 14V par l'intermédiaire d'une conduite d'alimentation,
**caractérisé en ce que**
l'instrument de commande (SG) comporte un mécanisme de couplage (SE), qui dans le cas d'un court-circuit entre la branche 14V et la branche 42V connecte la conduite d'alimentation contre la masse ou comporte un dispositif de réglage, qui dans le cas d'un court-circuit entre la branche 14V et la branche 42V règle la conduite d'alimentation sur une valeur de tension constante et **en ce que** le mécanisme de couplage (SE), respectivement le dispositif de réglage déclenche un fusible de sécurité (SI) situé dans la branche 14V ou dans la branche 42V.

2. Circuit de protection contre la surtension selon la revendication 1, **caractérisé en ce que** le mécanisme de couplage (SE) est conçu sous la forme d'un commutateur statique.

3. Circuit de protection contre la surtension selon la revendication 1, **caractérisé en ce que** le mécanisme de couplage (SE) est conçu sous la forme d'un relais.
